# EUROPÄISCHE PATENTSCHRIFT

(11) **EP 3 068 615 B1**
(45) Veröffentlichungstag und Bekanntmachung des Hinweises auf die Patenterteilung: **17.05.2023**
(21) Anmeldenummer: 14755052.9
(22) Anmeldetag: 20.08.2014
(51) Int. Cl.: B29C 73/16, B29L 30/00

(54) **VORRICHTUNG ZUM ABDICHTEN UND AUFPUMPEN AUFBLASBARER GEGENSTÄNDE MIT LAGEVENTIL**
DEVICE FOR SEALING AND INFLATING INFLATABLE ARTICLES WITH ATTITUDE VALVE
DISPOSITIF PERMETTANT D'ÉTANCHÉIFIER ET DE GONFLER DES ARTICLES GONFLABLES AVEC UNE VALVE DE POSITION

(30) Priorität: 13.11.2013 DE 102013223107
(43) Veröffentlichungstag der Anmeldung: 21.09.2016
(73) Patentinhaber: Continental Reifen Deutschland GmbH, 30165 Hannover (DE)
(72) Erfinder: ZAUM, Christopher, 30926 Seelze (DE); DETERING, Rainer, 31535 Neustadt am Rbge. (DE)
(74) Vertreter: Continental Corporation
(86) Internationale Anmeldenummer: PCT/EP2014/067697
(87) Internationale Veröffentlichungsnummer: WO 2015/070999

(56) Entgegenhaltungen:
- EP-A1- 2 090 419
- EP-A2- 2 064 051
- WO-A1-2008/115527
- DE-A1-102011 001 603
- DE-U1-202008 012 804
- GB-A- 2 482 016
- JP-A- 2010 023 244
- US-A1- 2003 056 851

## Beschreibung

Die Erfindung betrifft eine Vorrichtung zum Abdichten und Aufpumpen aufblasbarer Gegenstände, insbesondere ein Pannenset zum Abdichten und Aufpumpen von Kraftfahrzeugreifen, wobei die Vorrichtung eine Druckluftquelle, insbesondere einen durch einen Motor, vorzugsweise einen Elektromotor angetriebenen Kompressor aufweist zum Aufpumpen der Gegenstände, sowie einen Anschluss für einen Behälter mit Dichtmittel, eine Ventil- und Verteilereinheit für Dichtmittel und Druckgas, weiterhin Verbindungsmittel aufweist wie etwa Schläuche zwischen Ventil- und Verteilereinheit und aufblasbarem Gegenstand, sowie ggf. Verbindungsmittel zur Energiezufuhr, und die übliche Schalt-, und/oder Steuer- und Anzeigeeinrichtungen, wie etwa Manometer für den Betrieb der Vorrichtung beinhaltet.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits Reparatursätze oder Pannensets bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

So offenbart die DE 29812740 Ul 1 einen Reparatursatz mit einem tragbaren Behälter zur Aufnahme von Bordwerkzeugen und Arbeitsgeräten für Fahrzeuge, insbesondere zur Aufnahme von Kompressor, Werkzeugen, Arbeitsgeräten und Zubehör zur Instandsetzung von Reifen, wobei der Behälter in Form eines Koffers ausgebildet ist und mehrere Teilräume für das Zubehör sowie Schalt-, Steuer- und Anzeigeeinrichtungen beinhaltet. Solche handelsüblichen Pannensets zur Reifenabdichtung müssen für jeden Laien auf einfachste Weise und ohne Fehlermöglichkeiten zu bedienen und von daher außergewöhnlich betriebssicher ausgebildet sein. Es sind deswegen eine Reihe von Einrichtungen erforderlich, die alle denkbaren Fehlbedienungen tolerant ausgleichen und in einfacher Weise zur richtigen Anwendung leiten.

So offenbart die EP 2 064 051 A2 eine Reparatureinrichtung für aufblasbarer Gegenstände, die mit Rückschlagventilen am Eintritt in den aufblasbaren Gegenstand und am Austritt des Dichtmittels aus einer Flasche versehen ist. Die Rückschlagventile können durch entsprechend ausgebildete mechanischen Stößel bzw. Flaschenhalsvorsprünge geöffnet werden und verhindern so eine Fehlbedienung oder eine Fehlleitung von Druckmedium oder Dichtmittel.

Die JP 2010 023244 A offenbart eine Vorrichtung gemäß dem Oberbegriff des Anspruchs 1, bei der ein Kugelrückschlagventil so angeordnet ist, dass grundsätzlich der Rückfluss von Dichtmittel verhindert wird und das Kugelrückschlagventil erst durch den Kompressordruck geöffnet werden kann.

Wie bereits dargelegt, werden die Luftkompressoren für solche Pannensets zur temporären Reparatur von Reifenpannen werden üblicherweise über ein Anschlussstück, nämlich über die so genannte Ventil- und Verteilereinheit mit einer Dichtmittelflasche und dem zu reparierenden Reifen verbunden.

Die Ventil- und Verteilereinheit sorgt dafür, dass Druckluft vom Kompressor in den Dichtmittelbehälter/die Dichtmittelflasche geleitet wird und das Dichtmittel aus dem Behälter über ebenfalls die Ventil- und Verteilereinheit austreibt und über entsprechende Verbindungsschläuche in den Reifen befördert, d.h. dass also das Dichtmittel in den Reifen gepumpt wird. Die Ventil- und Verteilereinheit soll aber auch eine direkte Verbindung zwischen Kompressor und Reifen ermöglichen, wodurch ohne Einfüllen von Dichtmittel der Reifen lediglich aufgepumpt werden kann. Diese vielfältigen Nutzungsmöglichkeiten erfordern ein recht komplizierte Konstruktion einer solchen Ventil- und Verteilereinheit mit einer Reihe von Kanälen und Schaltfunktionen.

Bei herkömmlichen Konstruktionen von Pannensets wird die im Lagerungszustand üblicherweise versiegelte Dichtmittelflasche auf die Ventil- und Verteilereinheit aufgeschraubt. In aller Regel wird durch das Aufschrauben oder Aufsetzten wird die Versiegelung aufgebrochen und so der Dichtmittelbehälter/die Dichtmittelflasche automatisch betriebsbereit gestellt.

Mehr oder weniger kurz danach wird der Kompressor vom Bediener eingeschaltet. Im Hinblick auf die genannte Betriebssicherheit und auf das Vermeiden von denkbaren Fehlbedienungen können durch dieses zeitversetzte Einschalten des Kompressors nun kleinere Probleme entstehen. Vor Einschalten des Kompressors, d.h. im noch drucklosen Zustand des Systems kann das im Dichtmittelbehälter/in der Dichtmittelflasche enthaltende Reifendichtmittel möglicherweise auch gegen die vorgesehene Flussrichtung bewegt werden. Dies könnte geschehen z.B. beim Verkippen des Systems aus seiner üblichen Ruhelage oder aus dem vorgesehenen Stand. Fließt aber nun Reifendichtmittel gegen die vorgesehene Flussrichtung in den Kompressor, so könnte dieser beim späteren Betrieb beschädigt werden.

Um einen Rückfluss des Reifendichtmittels in bestimmte Systemkomponenten zu verhindern, wird im Stand der Technik üblicherweise ein Rückschlagventil eingesetzt oder ein verlängerter Luftweg zwischen Dichtmittelflasche und Kompressor vorgesehen. Nachteilig beim Einsatz eine solchen zusätzlichen Rückschlagventils ist es, dass der Einbau dieses Rückschlagventils eine genaue
Druckmessung in dem zu reparierenden Reifen verhindert. Das kann für den Endbenutzer ein Sicherheitsrisiko darstellen. Ein verlängerter Luftweg dagegen erhöht die Material- und Produktionskosten und wirkt sich negativ auf die erreichte Systemleistung aus.

Für die Erfindung bestand daher die Aufgabe, eine Vorrichtung zum Abdichten und Aufpumpen aufblasbarer Gegenstände bereitzustellen, bei der bei einfacher Bauweise der Ventil- und Verteilereinheit ein Dichtmittelrückfluß in den Kompressor vermieden wird somit insgesamt ein hohe Betriebssicherheit erreicht und weitere denkbare Fehlbedienungen ausgeschlossen werden.

Gelöst wird diese Aufgabe durch die Merkmale des Hauptanspruchs. Weitere vorteilhafte Ausbildungen sind in den Unteransprüchen offenbart.

Dabei ist in der Ventil- und Verteilereinheit ein mit einem Ventilsitz zusammenwirkendes Ventil angeordnet, welches abhängig von der Lage der Ventil- und Verteilereinheit die Verbindungen/Verbindungskanäle zwischen Dichtmittelbehälter und Druckluftquelle reversibel schließt, wobei im Betriebszustand der Behälter mit Dichtmittel über Kopf in die Ventil- und Verteilereinheit eingesetzt, vorzugsweise eingeschraubt ist und das Ventil so ausgebildet ist, dass eine Abweichung von mehr als 20° von der Überkopflage des Dichtmittelbehälters in Richtung des Kompressors ein Schließen des Ventils bewirkt.

In der vorgesehenen Betriebsposition erfolgt dabei kein Dichtmittelrückfluss und die Ventilkugel gibt den Luftkanal frei. Wird das System bzw. die Vorrichtung zum Abdichten und Aufpumpen mitsamt der Ventil- und Verteilereinheit verkippt, z.B. in Richtung in Kompressorauslasses, könnte Dichtmittel in den Kompressorauslass fließen. Durch die erfindungsgemäße Ventilausbildung wird dies verhindert und der Kompressorauslass verschlossen. Eine Druckbeaufschlagung aufseiten des Luftkanals drückt das Ventil dabei noch fester auf den Ventilsitz. Das Ventil ist also geschlossen und ein Dichtmittelrückfluss wird verhindert.

Vorteilhafterweise ist hierzu bei einer erfindungsgemäßen Vorrichtung, die mit einem Kompressor als Druckluftquelle ausgebildet ist, die Ventil- und Verteilereinheit zwischen dem Auslass des Dichtmittelbehälters und dem Auslassventil des Kompressors angeordnet.

Besonders gut wird das genannte lageabhängige Schließen des Ventils dann realisiert, wenn sich der Ventilsitz auf Seiten der Druckluftquelle bzw. des Auslassventils des Kompressors befindet.

Im Gegensatz zu einem etwa durch eine Federkraft betriebenen Rückschlagventil kann mit der erfindungsgemäßen Ausführung in der normalen Betriebsposition problemlos mit dem üblicherweise am Kompressor oder an der Ventil- und Verteilereinheit angeschlossenen Manometer der Luftdruck im Reifen bestimmt werden. Dadurch existiert kein Betriebszustand, bei dem das Druckmessgerät/das Manometer am Kompressor einen höheren Druck anzeigen würde, als den, der tatsächlichen im Reifen vorhanden ist.

Eine vorteilhafte Weiterbildung besteht darin, dass das Ventil mindestens eine in einem Käfig oder Hohlraum bewegliche Kugel als Ventilkörper aufweist und dadurch schließbar ist, dass die Kugel schwerkraft- und lageabhängig in einen mit der Kugeloberfläche korrespondierenden Ventilsitz fällt. Ein solches Ventil ist sehr beweglich und gegen zufälliges Verklemmen oder anhaften unempfindlich.

Vorteilhafterweise sind in solch einem System Einrichtungen vorgesehen, die in Strömungsrichtung der Druckluft auf der dem Ventilsitz gegenüberligenden Seite, also z. B. im Bereich der Einlassöffnung zum Dichtmittelbehälter, vermeiden, dass der Ventilkörper durch zufällige Anlage an Öffnungsquerschnitte den Mediumsstrom in den blockiert.

Eine weitere vorteilhafte Ausbildung im Sinne einer sehr einfachen Konstruktion besteht darin, dass das Ventil als Klappenventil ausgebildet ist, und schwerkraft- und lageabhängig in einen korrespondierenden Ventilsitz fällt.

Eine weitere vorteilhafte Ausbildung besteht darin, dass der Verbindungskanal zwischen dem Auslass des Dichtmittelbehälters und der Druckleitung des Kompressors als rohrförmiger Hohlraum und der Ventilsitz als ein in den Verbindungskanal eingesetztes und endseitig mit dem Ventil korrespondierendes Rohrstück ausgebildet sind. Damit ist eine Konstruktion erreichbar, deren einzelne Elemente sehr einfach herzustellen sind. In einer solchen Ausführung können die o.g. Einrichtungen, die ein Blockieren vermeiden sollen, als in dem Rohr oder rohrförmigen Hohlkörper einegbrachte Rippen ausgebildet sein, an die sich der Ventilkörper unter Bereitstellung eines Durchlasses zwischen Ventilkörper und Wandung anlegen kann.

Eine weitere vorteilhafte Ausbildung besteht darin, dass der Ventilsitz oder das Ventil so ausgebildet sind, dass abhängig von der der Dichte des durchströmenden Mediums die Verbindungen/Verbindungskanäle zwischen Dichtmittelbehälter und Druckluftquelle reversibel schließbar sind. Dadurch wird die reversible Schließfunktion auch noch durch eine Strömungskraft unterstützt oder verstärkt und die Funktionsweise der Vorrichtung weiter verbessert.

Eine weitere vorteilhafte Ausbildung besteht darin, dass die Oberfläche des Ventilsitzes oder des Ventilkörpers Rauigkeiten oder Vertiefungen aufweisen, die abhängig von der Mediumsdichte eine Durchfluss durch das geschlossene Ventil ermöglichen. Dies führt dazu, dass eine Druckmessung im System, d.h. in den Bereichen vor und hinter dem Ventil, in jedem Betriebszustand, also auch bei "geschlossenem" Ventil möglich wird.

Erfindungsgemäß ist im Betriebszustand der Behälter mit Dichtmittel über Kopf in die Ventil- und Verteilereinheit eingesetzt, vorzugsweise eingeschraubt und das Ventil so ausgebildet, dass eine Abweichung von mehr als 20° von der Überkopflage des Dichtmittelbehälters ein Schließen des Ventils bewirkt. Damit ist in der üblichen Reparaturlage eine sicherer Betrieb möglich, während bei einem versehentlichen "Umfallen" der Vorrichtung ein unbemerkter Rückfluss von Dichtmittel in kritische Bereiche verhindert wird.

Die folgende Tabelle zeigt den Effekt einiger Lageveränderungen auf das Gesamtsystem und dessen Funktionsweise abhängig von der Fließrichtung und vom betroffenen bzw. bereitgestellten Betriebsmedium.

Man erkennt hier deutlich, dass mit der erfindungsgemäßen Vorrichtung ein Rückfluss des Dichtmittels in den Kompressor bei gekippter Vorrichtung verhindert wird.

| **Betriebslage** | **Druckdifferenz Eingang/Ausgang** | **Fluss des Betriebsmediums in Richtung** | **Betriebsmedium** | |
|---|---|---|---|---|
| | | | **Luft** | **Dichtmittel** |
| normal | keine | Kompressor | *Ventil offen* | *Ventil offen* |
| | | Dichtmittelbehälter | *Ventil offen* | *Ventil offen* |
| | vorhanden | Kompressor | *Ventil offen* | *Ventil geschlossen* |
| | | Dichtmittelbehälter | *Ventil offen* | *Ventil offen* |
| gekippt (Ventilsitz ist tiefster Punkt) | keine | Kompressor | *Ventil offen* | *Ventil geschlossen* |
| | | Dichtmittelbehälter | *Ventil offen* | *Ventil geschlossen* |
| | vorhanden | Kompressor | *Ventil offen* | *Ventil geschlossen* |
| | | Dichtmittelbehälter | *Ventil offen* | *Ventil offen* |
| gekippt (Ventilsitz ist höchster Punkt) | keine | Kompressor | *Ventil offen* | *Ventil offen* |
| | | Dichtmittelbehälter | *Ventil offen* | *Ventil offen* |
| | vorhanden | Kompressor | *Ventil offen* | *Ventil geschlossen* |
| | | Dichtmittelbehälter | *Ventil offen* | *Ventil offen* |

Eine weitere vorteilhafte Ausbildung besteht darin, dass der Ventilsitz oder das Ventil so ausgebildet sind, dass abhängig von der der Dichte des durchströmenden Mediums die Verbindungen/Verbindungskanäle zwischen Dichtmittelbehälter und Druckluftquelle reversibel schließbar sind. Damit unterstützt ein etwa in Richtung des Kompressors fließender Volumenstrom das Schließen des Ventils und verhindert zusätzlich ein einfließen von Dichtmittel in empfindliche Teile der Konstruktion.

Anhand eines Ausführungsbeispiels soll die Erfindung näher erläutert werden. Es zeigen
- Fig. 1: einen Ausschnitt aus einer erfindungsgemäße Vorrichtung mit einem lageabhängig schließenden Kugelventil,
- Fig. 2: eine vergrößerte Detaildarstellung eines als Ventilsitz ausgebildeten Rohrkörpers einer erfindungsgemäßen Vorrichtung.

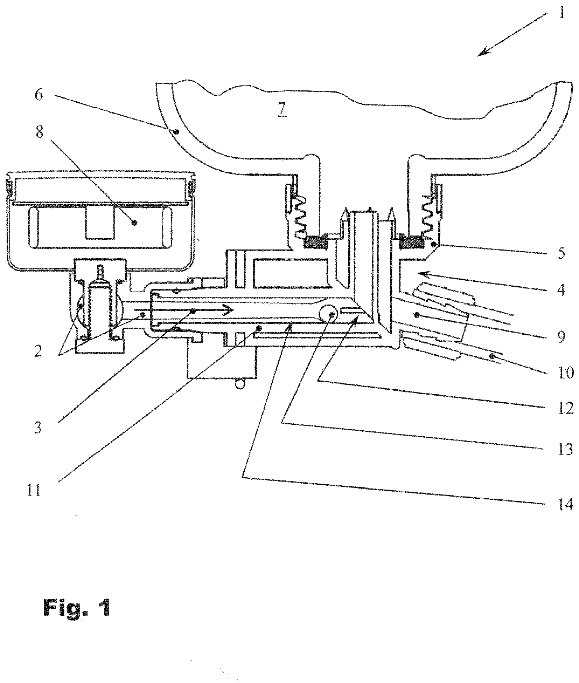

Die Fig. 1 zeigt einen Ausschnitt aus einer erfindungsgemäße Vorrichtung 1 zum Abdichten und Aufpumpen aufblasbarer Gegenstände, nämlich ein Pannenset zum Abdichten und Aufpumpen von Kraftfahrzeugreifen, wobei die Vorrichtung 1 einen hier nicht näher dargestellten und an die Leitung/Druckleitung 2 angeschlossenen Kompressor aufweist. Die übliche Strömungsrichtung der Luft in der Leitung 2 im normalen Betriebszustand ist durch den Strömungspfeil 3 dargestellt. Die Vorrichtung 1 weist weiterhin eine Ventil- und Verteilereinheit 4 für Dichtmittel und Druckgas auf mit einem Anschluss 5 für einen Behälter 6 mit Dichtmittel 7. An der Ventil- und Verteilereinheit 4 ist im Bereich der Leitung 2 auch ein Manometer 8 angeschlossen, mit dem der Luftdruck im Leitungssystem und auch der Luftdruck im Reifen im Reifen bestimmt werden können.

Die Ventil- und Verteilereinheit 4 für Dichtmittel und Druckgas beinhaltet weiterhin Verbindungsmittel zum Anschluss eines aufblasbarem Gegenstands, nämlich eines hier nicht näher dargestellten Reifens. Hierzu dient der Anschluss 9 und der zum Reifen führende Schlauch 10.

In der Ventil- und Verteilereinheit ein mit einem Ventilsitz zusammenwirkendes Ventil angeordnet ist, welches abhängig von der Lage der Ventil- und Verteilereinheit die Verbindungen/Verbindungskanäle zwischen Dichtmittelbehälter und Druckluftquelle reversibel schließt.

In der in Fig.1 gezeigten Ausführung ist der Verbindungskanal 11 zwischen dem Auslass 12 des Dichtmittelbehälters 6 und der Druckleitung 2 des Kompressors als rohrförmiger Hohlraum ausgebildet, wobei der Ventilsitz 15 durch ein Ende eines in den Verbindungskanal 11 eingesetzten und endseitig mit einem kugelförmigen Ventilkörper 13 korrespondierenden Rohrstücks 14 gebildet wird.

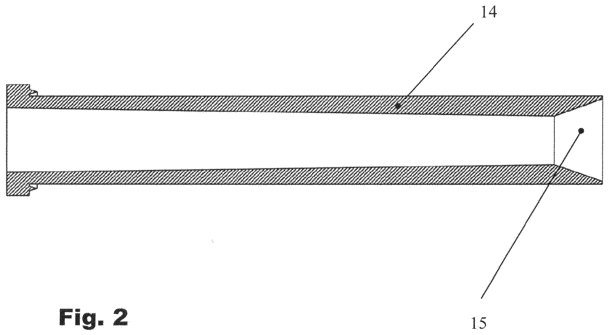

Das Ventil weist also eine in einem Hohlraum bewegliche Kugel als Ventilkörper auf und ist dadurch schließbar, dass die Kugel schwerkraft- und lageabhängig in einen mit der Kugeloberfläche korrespondierenden Ventilsitz 15 des Rohrstück 14 gedrückt wird. In der Fig.2 ist in einer vergrößerten Ansicht das Rohrstück 14 als Einzelteil näher dargestellt, Dort erkennt man auch den Ventilsitz 15 besonders gut.

Bei der hier als Kompressor ausgebildeten Druckluftquelle ist also die Ventil- und Verteilereinheit zwischen dem Auslass des Dichtmittelbehälters und dem hier nicht näher dargestellten Auslassventil des Kompressors und auch zwischen Manometer und Auslass des Dichtmittelbehälters angeordnet ist, wobei sich bei der Ventilsitz auf Seiten der Manometers bzw des Kompressors befindet. Ein solches Ventil natürlich kann auch zwischen Kompressor-Auslass und Manometer eingesetzt werden, jedoch sind dann ggf. empfindliche Manometerteile nicht gegen Dichtmittelrückfluß geschützt.

### Bezugszeichenliste

### (Teil der Beschreibung)

- 1: Vorrichtung zum Abdichten und Aufpumpen aufblasbarer Gegenstände
- 2: Leitung/Druckleitung
- 3: Strömungspfeil
- 4: Ventil- und Verteilereinheit
- 5: Anschluss für Behälter
- 6: Behälter
- 7: Dichtmittel
- 8: Manometer
- 9: Anschluss
- 10: Schlauch
- 11: Verbindungskanal
- 12: Auslass
- 13: Ventilkörper
- 14: Rohrstück
- 15: Ventilsitz

## Patentansprüche

1. Vorrichtung (1) zum Abdichten und Aufpumpen aufblasbarer Gegenstände, insbesondere Pannenset zum Abdichten und Aufpumpen von Kraftfahrzeugreifen, wobei die Vorrichtung eine Druckluftquelle, insbesondere einen Kompressor aufweist zum Aufpumpen der Gegenstände sowie einen Anschluss (5) für einen Behälter (6) mit Dichtmittel (7), eine Ventil- und Verteilereinheit (4) für Dichtmittel und Druckgas, weiterhin Verbindungsmittel aufweist wie etwa Schläuche (10) zwischen Ventil- und Verteilereinheit und aufblasbarem Gegenstand, **dadurch gekennzeichnet, dass** in der Ventil- und Verteilereinheit (4) ein mit einem Ventilsitz (15) zusammenwirkendes Ventil angeordnet ist, welches abhängig von der Lage der Ventil- und Verteilereinheit (4) die Verbindungen/Verbindungskanäle (11) zwischen Dichtmittelbehälter und Druckluftquelle reversibel schließt, wobei im Betriebszustand der Behälter mit Dichtmittel über Kopf in die Ventil- und Verteilereinheit eingesetzt, vorzugsweise eingeschraubt ist und das Ventil so ausgebildet ist, dass eine Abweichung von mehr als 20° von der Überkopflage des Dichtmittelbehälters in Richtung des Kompressors ein Schließen des Ventils bewirkt.

2. Vorrichtung nach Anspruch 1, ausgebildet mit einem Kompressor als Druckluftquelle, bei der die Ventil- und Verteilereinheit (4) zwischen dem Auslass (12) des Dichtmittelbehälters (6) und dem Kompressor bzw. dem Auslassventil des Kompressors angeordnet ist.

3. Vorrichtung nach Anspruch 1 oder 2, bei der sich der Ventilsitz (15) auf Seiten der Druckluftquelle bzw. des Kompressors befindet.

4. Vorrichtung nach einem der Ansprüche 1 bis 3, bei der das Ventil mindestens eine in einem Käfig oder Hohlraum bewegliche Kugel (13) als Ventilkörper aufweist und dadurch schließbar ist, dass die Kugel schwerkraft- und lageabhängig in einen mit der Kugeloberfläche korrespondierenden Ventilsitz (15) fällt.

5. Vorrichtung nach Anspruch 1, bei der das Ventil als Klappenventil ausgebildet ist, und schwerkraft- und lageabhängig in einen korrespondierenden Ventilsitz fällt.

6. Vorrichtung nach einem der Ansprüche 2 bis 5, bei der der Verbindungskanal (11) zwischen dem Auslass des Dichtmittelbehälters und der Druckleitung des Kompressors als rohrförmiger Hohlraum und der Ventilsitz (15) als ein Ende eines in den Verbindungskanal eingesetztes und endseitig mit dem Ventilkörper (13) korrespondierendes Rohrstück (14) ausgebildet sind.

7. Vorrichtung nach einem der Ansprüche 1 bis 6, bei der Ventilsitz oder das Ventil so ausgebildet sind, dass abhängig von der der Dichte des durchströmenden Mediums die Verbindungen/Verbindungskanäle zwischen Dichtmittelbehälter und Druckluftquelle reversibel schließbar sind.

8. Vorrichtung nach Anspruch 7, bei der die Oberfläche des Ventilsitzes (15) oder des Ventilkörpers (13) Rauigkeiten oder Vertiefungen aufweisen, die abhängig von der Mediumsdichte ein Durchfluss durch das geschlossene Ventil ermöglichen.

## Claims

1. Apparatus (1) for sealing and pumping up inflatable objects, in particular a breakdown kit for sealing and pumping up motor-vehicle tyres, wherein the apparatus has a compressed-air source, in particular a compressor, for pumping up the objects and also has a connection (5) for a container (6) with sealant (7), has a valve/distributor unit (4) for sealant and compressed gas, and furthermore has connecting means such as, for example, hoses (10) between valve/distributor unit and inflatable object, **characterized in that**, in the valve/distributor unit (4), there is arranged a valve which interacts with a valve seat (15), and which reversibly closes the connections/connecting channels (11) between sealant container and compressed-air source according to the position of the valve/distributor unit (4), wherein, in the operating state, the container with sealant is inserted, preferably screwed, upside-down into the valve/distributor unit, and the valve is designed in such a way that a deviation by more than 20° from the upside-down position of the sealant container in the direction of the compressor causes the valve to close.

2. Apparatus according to Claim 1, designed with a compressor as compressed-air source, in the case of which the valve/distributor unit (4) is arranged between the outlet (12) of the sealant container (6) and the compressor or the outlet valve of the compressor.

3. Apparatus according to Claim 1 or 2, in the case of which the valve seat (15) is situated on the side of the compressed-air source or of the compressor.

4. Apparatus according to one of Claims 1 to 3, in the case of which the valve has, as valve body, at least one ball (13) able to be moved in a cage or cavity and is able to be closed by the ball falling in a gravity- and position-dependent manner into a valve seat (15) which corresponds to the ball surface.

5. Apparatus according to Claim 1, in the case of which the valve is in the form of a flap valve and falls in a gravity- and position-dependent manner into a corresponding valve seat.

6. Apparatus according to one of Claims 2 to 5, in the case of which the connecting channel (11) between the outlet of the sealant container and the pressure line of the compressor is in the form of a tubular cavity and the valve seat (15) is in the form of one end of a piece of tube (14) which is inserted into the connecting channel and which corresponds at the end to the valve body (13).

7. Apparatus according to one of Claims 1 to 6, in the case of which the valve seat or the valve is designed in such a way that the connections/connecting channels between sealant container and compressed-air source are reversibly closable according to the density of the medium flowing through.

8. Apparatus according to Claim 7, in the case of which the surface of the valve seat (15) or of the valve body (13) has roughnesses or depressions which make it possible for flow to pass through the closed valve according to the density of the medium.

## Revendications

1. Dispositif (1) pour l'étanchéification et le gonflage d'articles gonflables, notamment kit de crevaison pour l'étanchéification et le gonflage de pneus de véhicules automobiles, le dispositif présentant une source d'air comprimé, notamment un compresseur pour le gonflage des articles ainsi qu'un raccord (5) pour un réservoir (6) avec un agent d'étanchéité (7), une unité de soupape et de distribution (4) pour l'agent d'étanchéité et le gaz sous pression, présentant en outre des moyens de liaison tels que des tuyaux (10) entre l'unité de soupape et de distribution et l'article gonflable, **caractérisé en ce qu'**une soupape coopérant avec un siège de soupape (15) est agencée dans l'unité de soupape et de distribution (4), laquelle, en fonction de la position de l'unité de soupape et de distribution (4), ferme de manière réversible les liaisons/canaux de liaison (11) entre le réservoir d'agent d'étanchéité et la source d'air comprimé, dans lequel, en mode de fonctionnement, le réservoir avec l'agent d'étanchéité est inséré, de préférence vissé, au-dessus de la tête dans l'unité de soupape et de distribution et la soupape est réalisée de telle sorte qu'un écart de plus de 20° par rapport à la position au-dessus de la tête du réservoir d'agent d'étanchéité en direction du compresseur provoque une fermeture de la soupape.

2. Dispositif selon la revendication 1, réalisé avec un compresseur en tant que source d'air comprimé, dans lequel l'unité de soupape et de distribution (4) est agencée entre la sortie (12) du réservoir d'agent d'étanchéité (6) et le compresseur ou la soupape de sortie du compresseur.

3. Dispositif selon la revendication 1 ou 2, dans lequel le siège de soupape (15) se trouve du côté de la source d'air comprimé ou du compresseur.

4. Dispositif selon l'une quelconque des revendications 1 à 3, dans lequel la soupape présente au moins une bille (13) mobile dans une cage ou une cavité en tant que corps de soupape et peut être fermée par le fait que la bille tombe en fonction de la force de gravité et de la position dans un siège de soupape (15) correspondant à la surface de la bille.

5. Dispositif selon la revendication 1, dans lequel la soupape est réalisée sous forme de soupape à clapet et tombe en fonction de la force de gravité et de la position dans un siège de soupape correspondant.

6. Dispositif selon l'une quelconque des revendications 2 à 5, dans lequel le canal de liaison (11) entre la sortie du réservoir d'agent d'étanchéité et la conduite de pression du compresseur est réalisé sous la forme d'une cavité tubulaire et le siège de soupape (15) est réalisé sous la forme d'une extrémité d'une pièce tubulaire (14) insérée dans le canal de liaison et correspondant à l'extrémité au corps de soupape (13).

7. Dispositif selon l'une quelconque des revendications 1 à 6, dans lequel le siège de soupape ou la soupape sont réalisés de telle sorte qu'en fonction de la densité du fluide qui les traverse, les liaisons/canaux de liaison entre le réservoir d'agent d'étanchéité et la source d'air comprimé peuvent être fermés de manière réversible.

8. Dispositif selon la revendication 7, dans lequel la surface du siège de soupape (15) ou du corps de soupape (13) présente des rugosités ou des creux qui, en fonction de la densité du fluide, permettent le passage à travers la soupape fermée.
